# EUROPEAN PATENT APPLICATION

(11) **EP 4 629 366 A1**
(43) Date of publication of application: **08.10.2025**
(21) Application number: 24215672.7
(22) Date of filing: 27.11.2024
(51) Int. Cl.: H01M 10/04, H01M 10/0583, H01M 10/0585, H01M 50/46, H01M 50/466, H01M 50/553, H01M 10/12

(54) **THERMAL COMPOSITE LAMINATED CELL**

(30) Priority: 03.04.2024 CN 202420693476 U; 15.07.2024 WO PCT/CN2024/105486
(71) Applicant: Eve Power Co., Ltd., Jingmen, Hubei 448000 (CN)
(72) Inventor: CHEN, Wei, Jingmen, Hubei 448000 (CN); LI, Weibo, Jingmen, Hubei 448000 (CN); CHEN, Liquan, Jingmen, Hubei 448000 (CN); SU, Bin, Jingmen, Hubei 448000 (CN); YUAN, Dingding, Jingmen, Hubei 448000 (CN); HE, Wei, Jingmen, Hubei 448000 (CN); LIU, Jincheng, Jingmen, Hubei 448000 (CN)
(74) Representative: Berggren Oy

(57) **Abstract**

A thermal composite laminated cell and a battery are disclosed. The thermal composite laminated cell is formed by folding a composite unit (100), and the composite unit (100) includes a first separator (110), a second separator (120), first electrode plates (130) and second electrode plates (140). Portions of the first separator (110) and the second separator (120) are fixedly connected to form pouch-like structures (150) each with an opening (151). The first electrode plates (130) are placed inside the respective pouch-like structures (150), and the second electrode plates (140) are alternately arranged at a side of the first separator (110) away from the first electrode plates (130) and at a side of the second separator (120) away from the first electrode plates (130) along the length direction of the composite unit (100).

## Description

### TECHNICAL FIELD

The present disclosure relates to the field of battery technologies, and in particular to a thermal composite laminated cell and a battery.

### BACKGROUND

Cells are the core structures of batteries. A cell includes cathode plates, anode plates, and a separator. The manufacturing process of the cell involves thermal lamination of the cathode plates, the anode plates, and the separator to form a single thermal composite unit, and then folding the thermal composite unit in an accordion style to form the cell. In the thermal composite unit, the separator is completely thermally laminated to the side surfaces of the anode plates or the cathode plates, and the separator is pressed very tightly with the anode plates and the cathode plates, which leads to difficulties in electrolyte injection and increased injection time in the later stage, as well as increased difficulty in electrolyte wetting, affecting the overall performance of the battery.

### SUMMARY

In a first aspect, embodiments of the present application provide a thermal composite laminated cell formed by folding a composite unit, the composite unit includes:
a first separator;
a second separator, the first separator and the second separator being stacked, portions of the first separator and portions of the second separator being fixedly connected to form a plurality of pouch-like structures each with an opening, and the plurality of pouch-like structures being arranged at intervals along a length direction of the composite unit;
a plurality of first electrode plates arranged in the plurality of pouch-like structures in a one-to-one correspondence; and
a plurality of second electrode plates, a polarity of the first electrode plates being opposite to a polarity of the second electrode plates, and the second electrode plates being alternately arranged at a side of the first separator away from the first electrode plates and at a side of the second separator away from the first electrode plates along the length direction of the composite unit.

In a second aspect, embodiments of the present application provide a battery including the thermal composite laminated cell described above.

Embodiments of the present disclosure have following benefits.

The laminated cell provided in the embodiments of the present application is formed by folding a composite unit in an accordion style, the composite unit includes a first separator, a second separator, a plurality of first electrode plates and a plurality of second electrode plates. Portions of the first separator and the second separator are fixedly connected to form a plurality of pouch-like structures each having an opening, and the plurality of pouch-like structures are disposed at intervals. The first electrode plates are placed inside the respective pouch-like structures, and the second electrode plates are alternately arranged at the outer sides of the first separator and the second separator. The first electrode plates are fixed between the first separator and the second separator through the pouch-like structures, and the first electrode plates are not directly attached to the first separator or the second separator, thereby overcoming the problem in existing thermal composite laminated cell that the compressed cathode plates or anode plates lead to difficulties in electrolyte injection and high difficulty in electrolyte wetting. The laminated cell facilitates subsequent electrolyte injection, is beneficial for electrolyte wetting, and improves the overall performance of the battery.

### BRIEF DESCRIPTION OF THE DRAWINGS

FIG. 1 is a top view of a composite unit in a thermal composite laminated cell provided in embodiments of the present application;
FIG. 2 is a sectional view of FIG. 1 along the A-A direction;
FIG. 3 is a sectional view of FIG. 1 along the B-B direction;
FIG. 4 is an enlarged view of the region C in FIG. 3;
FIG. 5 is a top view of a thermal composite laminated cell provided in embodiments of the present application;
FIG. 6 is a sectional view of FIG. 5 along the D-D direction;
FIG. 7 is an enlarged view of a composite unit in a thermal composite laminated cell, where the composite unit has an incompletely cutting-off structure and the incompletely cutting-off structure includes circular through-holes;
FIG. 8 is an enlarged view of a composite unit in a thermal composite laminated cell, where the composite unit has an incompletely cutting-off structure and the incompletely cutting-off structure includes rectangular through-holes; and
FIG. 9 is an enlarged view of a thermal composite laminated cell formed by folding the composite unit along incompletely cutting-off structures.

### Explanation of reference signs:

100. composite unit; 110. first separator; 120. second separator; 130. first electrode plate, 131. first electrode tab; 132. first side edge; 133. bottom edge; 134. second side edge; 135. top edge; 140. second electrode plate; 141. second electrode tab; 150. pouch-like structure; 151. opening; 152. laminated portion; 160. incompletely cutting-off structure; 161. through-hole; 200. thermal composite laminated cell.

### DETAILED DESCRIPTION

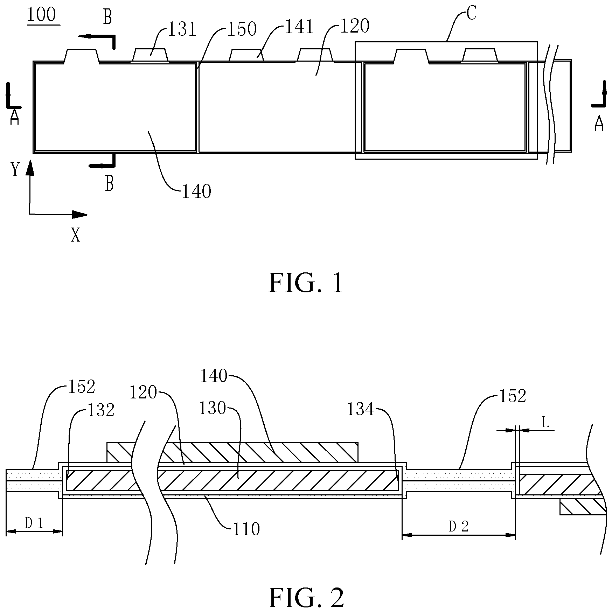

Referring to FIGS. 1 to 6, embodiments of the present application provide a thermal composite laminated cell 200, the thermal composite laminated cell 200 is formed by folding a composite unit 100, and the composite unit 100 is folded in an accordion style. The composite unit 100 includes a first separator 110, a second separator 120, a plurality of first electrode plates 130 and a plurality of second electrode plates 140. The cell may serve as an energy storage unit of a battery, the energy stored in the cell may be converted into electric current, and thus the battery may supply the electric current to electronic device(s).

In the embodiments, as shown in FIG. 1, the first separator 110 and the second separator 120 each are a continuous band, the first separator 110 and the second separator 120 have same shapes and sizes, and the first separator 110 and the second separator 120 are disposed parallel to each other. Portions of the first separator 110 and the second separator 120 are fixedly connected to form a plurality of pouch-like structures 150 each with an opening 151, and the plurality of pouch-like structures 150 are sequentially arranged along a length direction of the first separator 110.

In the embodiments, as shown in FIG. 1, the first electrode plates 130 each are a rectangular sheet, and a first electrode tab 131 is provided at a side of each first electrode plate 130. The first electrode tab 131 is a trapezoidal sheet, and a length of a side of the first electrode tab 131 connected to the first electrode plate 130 is greater than a length of an opposite side of the first electrode tab 131. Multiple first electrode plates 130 are correspondingly arranged in the plurality of pouch-like structures 150. The pouch-like structures 150 are in one-to-one correspondence with the first electrode plates 130, with each of the first electrode plates 130 arranged in a corresponding pouch-like structure 150. For example, at least a portion of the first electrode tab 131 may extend to an outside of the corresponding pouch-like structure 150 from the opening 151 thereof. All first electrode tabs 131 are located at the same side of the first separator 110. The first electrode plates 130 are fixed between the first separator 110 and the second separator 120 through the pouch-like structures 150, and the first electrode plates 130 are not attached to either of the separators on both sides.

In the embodiments, as shown in FIG. 1, the second electrode plate 140 each are a rectangular sheet, and a second electrode tab 141 is provided at a side of each second electrode plate 140. The second electrode tab 141 is a trapezoidal sheet, and a length of a side of the second electrode tab 141 connected to the second electrode plate 140 is greater than a length of an opposite side of the second electrode tab 141. At least a portion of the second electrode tab 141 extends to an outside of a corresponding pouch-like structure 150. The second electrode plates 140 are alternately arranged at a side of the first separator 110 facing away from the first electrode plates 130 and at a side of the second separator 120 facing away from the first electrode plates 130 along the length direction of the first separator 110, and the first electrode plates 130 are arranged opposite to the second electrode plates 140 in a one-to-one correspondence. The polarity of each second electrode plate 140 and the polarity of a corresponding one of the first electrode plates 130 are opposite; the polarity of each first electrode plate 130 and the polarity of the corresponding first electrode tab 131 are the same, and the polarity of each second electrode plate 140 and the polarity of the corresponding second electrode tab 141 are the same. For example, the polarity of the first electrode plates 130 and the polarity of the first electrode tabs 131 may be positive, and the polarity of the second electrode plates 140 and the polarity of the second electrode tabs 141 may be negative. Alternatively, the polarity of the first electrode plates 130 and the polarity of the first electrode tabs 131 may be negative, and the polarity of the second electrode plates 140 and the polarity of the second electrode tabs 141 may be positive.

It will be understood that, the first electrode plates 130 are fixed between the first separator 110 and the second separator 120 through the pouch-like structures 150 in the embodiments, the first electrode plates 130 are not attached to either of the first separator 110 and the second separator 120 on both sides, and the first electrode plates 130 are not compressed, thereby overcoming the problem in existing thermal composite laminated cells that the compressed cathode plates or anode plates lead to difficulties in electrolyte injection and high difficulty in electrolyte wetting. The thermal composite laminated cell 200 facilitates subsequent electrolyte injection, is beneficial for electrolyte wetting, and improves the overall performance of the battery.

In some embodiments, as shown in FIGS. 2 to 4, the pouch-like structures 150 each include a laminated portion 152 disposed along peripheral sides of the corresponding first electrode plate 130 where no first electrode tab 131 is provided. The first separator 110 and the second separator 120 are attached and connected at the position of each laminated portion 152; the first separator 110 and the second separator 120 can be considered as being attached and connected as long as portions of the first separator 110 and the second separator 120 are in contact.

It will be understood that, the laminated portion 152 is disposed along the peripheral sides of the first electrode plate 130 where no first electrode tab 131 is provided in the embodiments, and the shape of the pouch-like structure 150 formed by the laminated portion 152 is adapted to the shape of the first electrode plate 130, which reduces the waste of the separator material and lowers production costs.

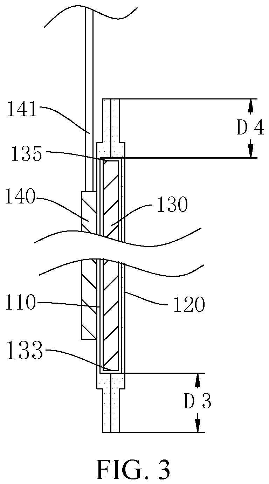

In some embodiments, as shown in FIGS. 2 and 3, the laminated portion 152 extends along the peripheral sides of the first electrode plate 130 and is continuously arranged, which means that the laminated portion 152 is a continuous laminated line, and the laminated line is disposed continuously along the peripheral sides of the first electrode plate 130 and fully encapsulates the portion of the first electrode plate 130 except for where the first electrode tab 131 is located. Thus, it avoids contact between adjacent first electrode plates 130 in the composite unit 100, and improves the reliability of the thermal composite laminated cell. The laminated portion 152 at the same side of the first electrode plate 130 may include multiple laminated lines, with adjacent laminating lines disposed at intervals. Alternatively, the laminated portion 152 may be a single laminated line of a certain width.

Alternatively, the laminated portion 152 may be multiple disconnected laminated points, and the laminated points are disposed along the peripheral sides of the first electrode plate 130. The first separator 110 and the second separator 120 are attached and connected at the laminated points, while the first separator 110 and the second separator 120 are disconnected at other positions. The pouch-like structure 150 is formed through the laminated points, ensuring the structural strength of the separators. In addition, the distances between any two adjacent laminated points are the same, facilitating the processing of the laminated points.

For example, the first separator 110 and the second separator 120 are attached and connected at the laminated portion 152; the two separators are considered as being attached and connected as long as a portion of one separator contacts the other separator.

In some embodiments, as shown in FIGS. 2 and 3, the first electrode plate 130 includes a first side edge 132, a bottom edge 133, a second side edge 134 and a top edge 135. The first side edge 132 is opposite to the second side edge 134, the first electrode tab 131 is disposed on the top edge 135, and the bottom edge 133 is opposite to the top edge 135. The first side edge 132 and the second side edge 134 have the same dimensions, and the top edge 135 and the bottom edge 133 have the same dimensions, and thus the first electrode plate 130 is a rectangular sheet with a regular shape, which is convenient for processing.

In some embodiments, as shown in FIG. 2, a width of a part of the laminated portion 152 at a side where the first side edge 132 is located is the same as a width of a part of the laminated portion 152 at a side where the second side edge 134 is located. The part of the laminated portion 152 at the side where the first side edge 132 is located refers to a segment of the laminated portion 152 that is close to the first side edge 132, and the part of the laminated portion 152 at the side where the second side edge 134 is located refers to a segment of the laminated portion 152 that is close to the second side edge 134. The width refers to the perpendicular distance between the side edge of the first electrode plate 130 and a side edge of the part of the laminated portion 152 at the side where the side edge of the first electrode plate 130 is located.

In the embodiments, the width of the part of the laminated portion 152 at the side where the first side edge 132 is located is the same as the width of the part of the laminated portion 152 at the side where the second side edge 134 is located, which facilitates processing and ensures that the structural strengths of the separators on the two sides of the first electrode plate 130 are the same.

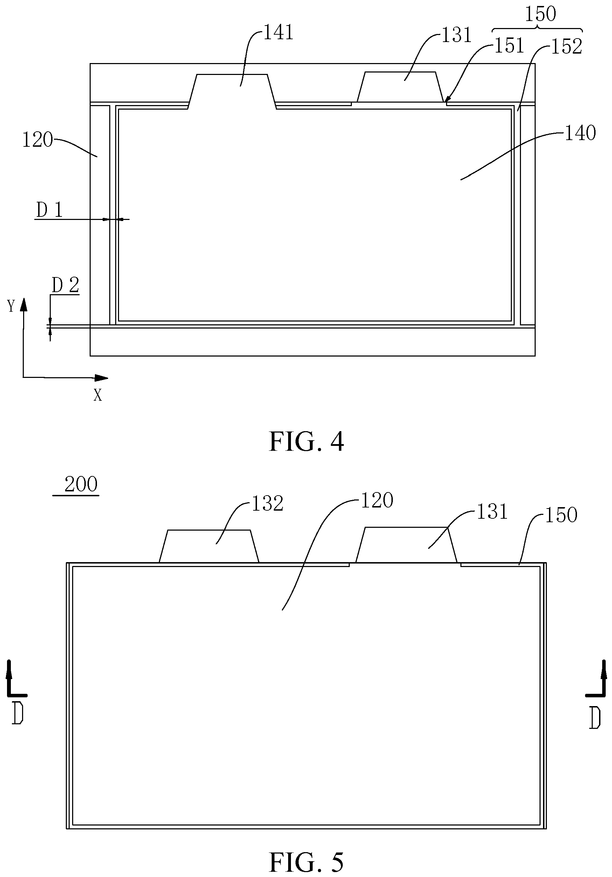

In some embodiments, as shown in FIGS. 2 and 4, the width of the part of the laminated portion 152 at the side where the first side edge 132 is located is D1, where 4 mm ≤ D1 ≤ 10 mm. D1 may be 4 mm, 6 mm, 7 mm, 9 mm, 10 mm, or any other quantity within the above range. In the embodiments, the part of the laminated portion 152 at the side where the first side edge 132 is located is in the shape of a straight line with a certain width, and the width of the part of the laminated portion 152 refers to the minimum distance between one edge and the other edge of the part of the laminated portion 152 in a width direction of the first separator 110, where the width direction is perpendicular to the length direction of the first separator 110.

In some embodiments, as shown in FIGS. 2 and 4, the width of the part of the laminated portion 152 at the side where the second side edge 134 is located is D2, where 4 mm ≤ D2 ≤ 10 mm. D2 may be 4 mm, 6 mm, 7 mm, 9 mm, 10 mm, or any other quantity within the above range. In the embodiments, the part of the laminated portion 152 at the side where the second side edge 134 is located is in the shape of a straight line with a certain width, and the width of the part of the laminated portion 152 refers to the minimum distance between one edge and the other edge of the part of the laminated portion 152 in the width direction of the first separator 110.

It will be understood that that, in the extension direction of the first side edge 132 (or the second side edge 134), the width of the part of the laminated portion 152 at the side where the first side edge 132 (or the second side edge 134) is located may be the same or different. For example, in the direction from one end to the other end of the first side edge 132, the width of the part of the laminated portion 152 may gradually increase or decrease, or the width of the part of the laminated portion 152 near the ends may be greater than the width near the middle.

In some embodiments, as shown in FIG. 3, the width of the part of the laminated portion 152 at the side where the bottom edge 133 is located is the same as the width of the part of the laminated portion 152 at the side where the top edge 135 is located. The part of the laminated portion 152 at the side where the bottom edge 133 is located refers to a segment of the laminated portion 152 close to the bottom edge 133, and similarly, the part of the laminated portion 152 at the side where the top edge 135 is located refers to a segment of the laminated portion 152 close to the top edge 135. The width refers to the perpendicular distance between the bottom or top edge of the first electrode plate 130 and a side edge of the part of the laminated portion 152 at the side where the bottom or top edge of the first electrode plate 130 is located.

In the embodiments, the width of the part of the laminated portion 152 at the side where the bottom edge 133 is located and the width of the part of the laminated portion 152 at the side where the top edge 135 is located are the same, which facilitates processing and ensures that the structural strengths of the laminated portion 152 at two ends of the first electrode plate 130 are the same.

In some embodiments, as shown in FIG. 3, the width of the part of the laminated portion 152 at the side where the bottom edge 133 is located is D3, where 2 mm ≤ D3 ≤ 5 mm. D3 may be 2 mm, 2.3 mm, 2.7 mm, 3 mm, 3.5 mm, 4.2 mm, 4.8 mm, or 5 mm.

In some embodiments, as shown in FIG. 3, the width of the part of the laminated portion 152 at the side where the top edge 135 is located is D4, where 2 mm ≤ D4 ≤ 5 mm. D4 may be 2 mm, 2.5 mm, 3.3 mm, 3.5 mm, 4 mm, 4.6 mm, or 5 mm.

It will be understood that, in the extension direction of the bottom edge 133 (or the top edge 135), the width of the part of the laminated portion 152 at the side where the bottom edge 133 (or the top edge 135) is located may be the same or different. For example, in the direction from one end to the other end of the bottom edge 133, the width of the part of the laminated portion 152 may gradually increase or decrease, or the width of the part of the laminated portion 152 near the ends may be greater than the width near the middle.

In the embodiments, the first electrode plates 130 are completely wrapped by the first separator 110 and the second separator 120, avoiding contact between the first electrode plates 130 and the second electrode plates 140, meeting the electrical safety requirements of the thermal composite laminated cell, and improving the reliability of the thermal composite laminated cell. The size of the laminated portions 152 are reasonably set to meet structural performance requirements while avoiding excessive size of the laminated portions 152 from wasting separator materials.

In some embodiments, as shown in FIG. 2, a distance L exists between a side of the first electrode plate 130 where no first electrode tab 131 is provided and the part of the laminated portion 152 located at the side of the first electrode plate, where 1 mm ≤ L ≤ 3 mm.

In some embodiments, as shown in FIGS. 2, 3, and 6, the first separator 110 and the second separator 120 are thermally laminated at the position of each laminated portion 152.

It will be understood that, during the processing of the composite unit 100, the first electrode plates 130 are located between the first separator 110 and the second separator 120, and the first electrode plates 130 move along with the first separator 110 and the second separator 120. During the movement of the first electrode plates 130, the first separator 110, the second separator 120 and the first electrode plates 130 pass through a pair of heated rollers. The first separator 110 and the second separator 120 are thermally laminated and connected at positions of the laminated portions 152 with the thermal lamination process. The processing technique is simple, which improves processing efficiency.

In some embodiments, as shown in FIGS. 2, 3, and 6, the second electrode plates 140 each are thermally laminated with the first separator 110 or the second separator 120. One side surface of each second electrode plate 140 is thermally laminated and connected to the side surface of the first separator 110 or the second separator 120 through the thermal lamination process, which ensures a stable connection between each second electrode plates 140 and the first separator 110 or the second separator 120, and prevents the second electrode plates 140 from falling off. In addition, the other side surface of each second electrode plate 140 is not laminated with any separator, and thus the second electrode plates 140 are not compressed, which facilitates subsequent electrolyte injection, is beneficial for electrolyte wetting, and improves the overall performance of the battery. For example, the thermal lamination process is as follows: the positive electrode material, the negative electrode material, and the separators are fed simultaneously. Before entering the heating device, the positive electrode material and the negative electrode material are cut, by the knife, into individual plates with the required size(s). The combination of the positive electrode plates, the negative electrode plates, and the separators enters the heating device under the action of rollers. The first separator 110 and the second separator 120 are thermally bonded by heat at the peripheral sides of each first electrode plates 130 where no first electrode tab 131 is provided. After baking, the second electrode plates 140 are thermally laminated with the separators, then the combination is rolled and cut to form the composite unit(s).

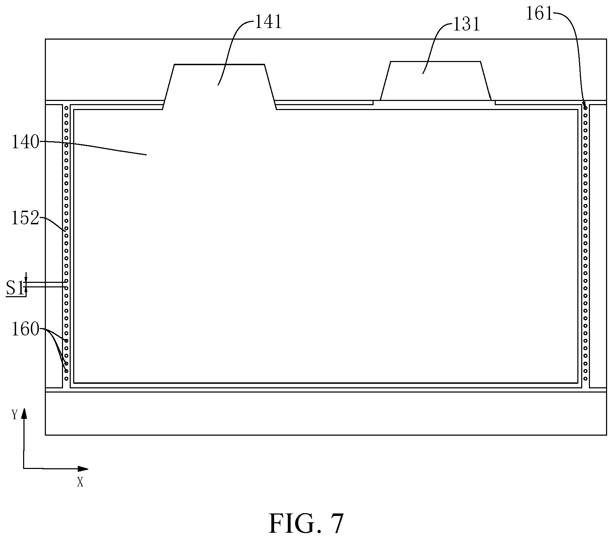

In some embodiments, as shown in FIGS. 7 to 9, an incompletely cutting-off structure 160 exists at the laminated portion 152 between two adjacent first electrode plates 130, and the composite unit 100 is folded along the incompletely cutting-off structures 160.

It will be understood that, the first separator 110 and the second separator 120 are provided with the incompletely cutting-off structures 160 in the embodiments, which results in lower stress at the positions of the incompletely cutting-off structures 160 during the folding process of the composite unit 100. The incompletely cutting-off structures 160 can release the stress generated by folding, making it easier for the first separator 110 and the second separator 120 to be folded at the positions of the incompletely cutting-off structures 160, thereby playing a role in defining the folding positions and improving the folding quality and efficiency. This is beneficial for the alignment of the first electrode plates 130 and the second electrode plates 140, and the alignment of the thermal composite laminated cell is improved, thereby avoiding the situation where lithium ions detached from the positive electrode plates cannot be fully embedded into the negative electrode plates due to the misalignment of the first electrode plates 130 and the second electrode plates 140. The unembedded lithium ions can only receive electrons on the surfaces of the negative electrode plates, forming white metallic lithium, leading to the occurrence of lithium dendrites piercing the separators. Therefore, the thermal composite laminated cell in the embodiments ensures the stable performance of the laminated cell.

In some embodiments, as shown in FIG. 7, the incompletely cutting-off structure 160 includes a plurality of through-holes 161 penetrating the laminated portion 152, the plurality of through-holes 161 are disposed at intervals along a width direction Y of the composite unit 100. Alternatively, the through-holes 161 may be arranged in an array, with multiple rows of through-holes 161 arranged along the length direction X of the composite unit 100, and each row of through-holes 161 being arranged along the width direction Y of the composite unit 100. For example, the multiple rows of through-holes 161 may be parallel to each other. In other embodiments, at least one row of through-holes 161 may be arranged in a direction that forms an angle with the arrangement direction of another row of through-holes. For example, the angle may be less than or equal to 10°, such as 1°, 2°, 5°, etc. In other embodiments, the angle may also be greater than 10°, and this is not limited in the embodiments of the present application. For example, among any two rows of through-holes 161, the through-holes 161 in one row of through-holes 161 may be arranged opposite to the through-holes 161 in the other row of through-holes 161. In some other embodiments, the through-holes in at least one row of through-holes 161 may be arranged in a staggered manner with the through-holes in another row. Two through-holes 161 may be considered as being arranged in the staggered manner if the projections of the two through-holes 161 in the length direction X of the composite unit 100 are not overlapping. For example, for each pair of adjacent rows of through-holes 161, the through-holes 161 in one row may be arranged in the staggered manner with respect to the through-holes 161 in the other row.

In other embodiments, the incompletely cutting-off structure 160 may include a plurality of slits disposed at intervals. The slits can be obtained by cutting the separator with a knife or the like. In addition, the incompletely cutting-off structure 160 may also resemble a mesh pattern.

It will be understood that, by arranging the plurality of through-holes 161 at the laminated portion 152 to form the incompletely cutting-off structure 160, materials of parts of the laminated portion 152 are cut off. The laminated portion 152 is not completely cut off along the width direction Y of the composite unit 100, making parts of the laminated portion 152 around the through-holes 161 weak. When the composite unit 100 is folded in free fall, the composite unit 100 will be folded along the straight lines where the through-holes 161 are arranged, which is conducive to the alignment of the first electrode plates 130 and the second electrode plates 140 in the laminated cell.

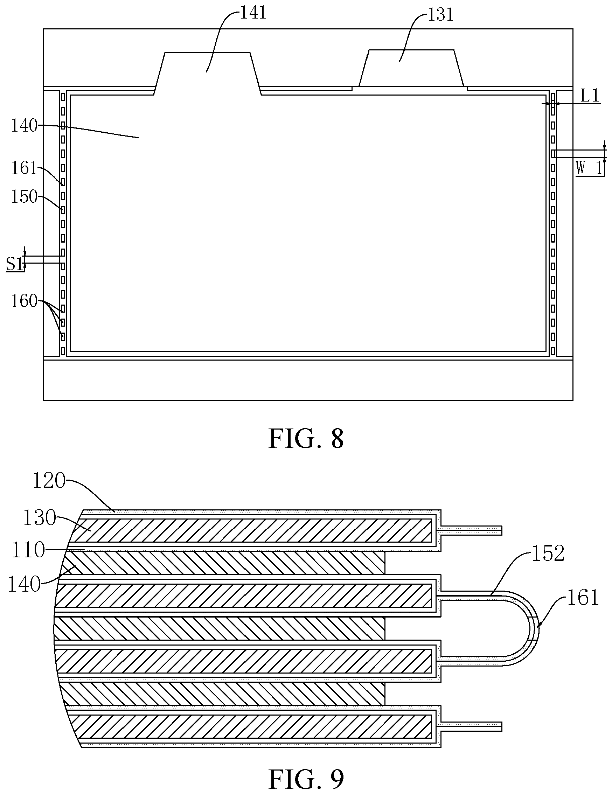

In some embodiments, as shown in FIGS. 7 and 8, spacings between any two adjacent through-holes 161 are the same. The spacing between any two adjacent through-holes 161 refers to the distance between a side edge of one through-hole 161 and a side edge of the adjacent through-hole 161 along the width direction of the composite unit 100.

In the embodiments, the spacings between adjacent through-holes 161 are the same, which is conducive to processing the through-holes 161 in the composite unit 100, ensuring that the strengths of the separators along the straight lines where the multiple through-holes 161 are arranged are the same, and avoiding the situation where the separators are torn during the folding process due to some local weak strength.

In some embodiments, as shown in FIGS. 7 and 8, the through-holes 161 each are in a shape of a circle, a rectangle, an ellipse, a hexagon, an octagon, or other regular shape. In addition to the regular shapes, each of the through-holes 161 may also be in an irregular shape.

In some embodiments, as shown in FIGS. 7 and 8, the spacings between every two adjacent through-holes 161 each are S1, where 5 mm ≤ S1 ≤ 20 mm. S1 may be 5.0 mm, 5.2 mm, 5.7 mm, 7.8 mm, 9.0 mm, 10.5 mm, 11.5 mm, 12.3 mm, 13.9 mm, 14.0 mm, 15.7 mm, 16.1 mm, 17.4 mm, 18.0 mm, 19.6 mm, 20.0 mm, or other quantity not listed.

It will be understood that, the spacings between the through-holes 161 are reasonably set in the embodiments, thus avoiding the fact that the structural strength of the composite unit 100 is affected due to too small spacing(s) between the through-holes 161 and too large number of the through-holes 161, and avoiding the fact that the through-holes 161 cannot play a role of positioning the fold lines during the folding process due to too large spacing(s) between the through-holes 161 and to small number of the through-holes 161.

In some embodiments, as shown in FIG. 8, the through-holes 161 are rectangular, and the through-holes 161 each have a first dimension L1 and a second dimension W1. The first dimension is a distance between two parallel virtual planes that are in contact with two side walls of the through-hole 161, and the second dimension is a distance between two parallel virtual planes that are in contact with two end walls of the through-hole 161. In this case, 1 mm ≤ L1 ≤ 20 mm, and/or, 1 mm ≤ W1 ≤ 2 mm. The side walls refer to the walls extending along the width direction Y of the first separator 110, and the end walls refer to the walls extending along the length direction X of the composite unit 100. In the embodiments, L1 may be 1.1 mm, 1.2 mm, 1.5 mm, 2.3 mm, 3.4 mm, 4.2 mm, 5.0 mm, 6.8 mm, 7.8 mm, 8.8 mm, 9.0 mm, 10.3 mm, 11.1 mm, 12.5 mm, 13.8 mm, 14.1 mm, 15.0 mm, 16.6 mm, 17.7 mm, 18.2 mm, 19.1 mm, 20.0 mm, or other quantity not listed. In the embodiments, W1 may be 1.1 mm, 1.2 mm, 1.4 mm, 1.5 mm, 1.8 mm, 2.0 mm, or other quantity not listed.

It should be noted that, the two parallel virtual planes are introduced for the sake of convenience to understand the first dimension and the second dimension, and do not actually exist in the scheme of the present application. For example, for the rectangular through-hole 161, two sets of planes may be imagined to determine the first dimension and the second dimension, each set including two parallel planes spaced apart, each set of two parallel planes may virtually be in contact with two opposite walls of the through-hole 161 simultaneously. In this case, there is a distance between the two planes of each set. The first dimension is the distance between the two planes that are in contact with the two side walls of the through-hole 161, and the second dimension is the distance between the two planes that are in contact with the two end walls of the through-hole 161.

It will be understood that, the size(s) of the through-holes 161 are reasonably set in the embodiments to avoid oversized through-holes 161 from affecting the structural strength of the composite unit 100, or avoid too small through-holes 161 which cannot play a role of positioning the fold lines during the folding process.

In some embodiments, the first electrode plates 130 each are a negative electrode plate or a positive electrode plate, and the second electrode plates 140 each are a positive electrode plate or a negative electrode plate.

For example, if the first electrode plates 130 are negative electrode plates, correspondingly, the second electrode plates 140 are positive electrode plates; if the first electrode plates 130 are positive electrode plates, correspondingly, the second electrode plates 140 are negative electrode plates.

In some embodiments, as shown in FIG. 9, the length of the negative electrode plates is greater than the length of the positive electrode plates, and the width of the negative electrode plates is greater than the width of the positive electrode plates. In the thermal composite laminated cell, the projection of each positive electrode plate in the thickness direction Z of the thermal composite laminated cell completely falls within the planar region where each negative electrode plate is located.

It will be understood that, if the first electrode plates 130 are the negative electrode plates and the second electrode plates 140 are the positive electrode plates, the length of the first electrode plates 130 is greater than the length of the second electrode plates 140, and the width of the first electrode plates 130 is greater than the width of the second electrode plates 140; if the first electrode plates 130 are the positive electrode plates and the second electrode plates 140 are the negative electrode plates, the length of the first electrode plates 130 is less than the length of the second electrode plates 140, and the width of the first electrode plates 130 is less than the width of the second electrode plates 140. The size of the negative electrode plates is set to be larger than that of the positive electrode plates, which ensures that the negative electrode plates can fully receive the lithium ions from the positive electrode plates during the charging process of the lithium battery, reducing the probability of formation of lithium dendrites, thereby avoiding the occurrence of thermal runaway caused by the short circuit due to the lithium dendrites piercing the composite unit 100. Therefore, the thermal composite laminated cell in the embodiments improves the reliability of the battery.

In some embodiments, the composite unit 100 includes N first electrode plates 130 and M second electrode plates 140, where N and M each are a positive integer greater than 1. When the first electrode plates 130 are the negative electrode plates and the second electrode plates 140 are the positive electrode plates, N - M = 1.

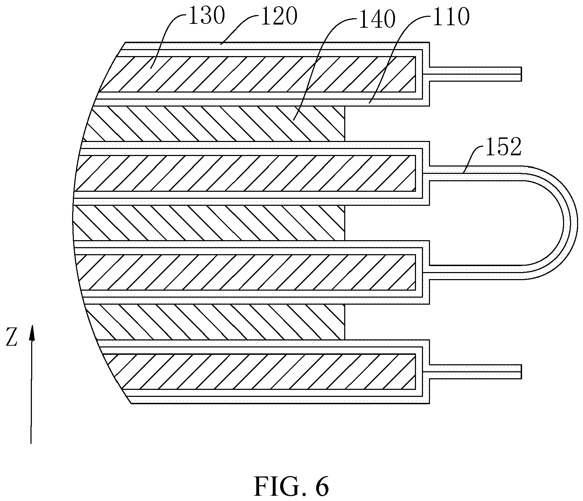

It will be understood that, referring to FIGS. 6 and 9, the first electrode plates 130 and the second electrode plates 140 are arranged alternately along a thickness direction Z of the thermal composite laminated cell, the number of negative electrode plates is one more than that of the positive electrode plates, and the two outermost plates of the thermal composite laminated cell are both negative electrode plates, which meets the electrical requirements of the battery.

In some embodiments, the composite unit 100 includes N first electrode plates and M second electrode plates, where N and M each are a positive integer greater than 1. When the first electrode plates 130 are the positive electrode plates and the second electrode plates 140 are the negative electrode plates, M - N = 1.

It will be understood that, the first electrode plates 130 and the second electrode plates 140 are arranged alternately along the thickness direction Z of the thermal composite laminated cell, the number of negative electrode plates is one more than that of the positive electrode plates, and the two outermost plates of the thermal composite laminated cell are both negative electrode plates, which meets the electrical requirements of the battery.

Embodiments of the present application provide a battery including the thermal composite laminated cell 200. The battery has same technical effects as the thermal composite laminated cell 200, and these technical effects will not be repeated in the embodiments of the present application.

In the present application, it will be understood that "A" and/or "B" means "A", "B" or a combination of "A" and "B".

## Claims

1. A thermal composite laminated cell, **characterized in that** the thermal composite laminated cell is formed by folding a composite unit (100), wherein the composite unit (100) comprises:
a first separator (110);
a second separator (120), wherein the first separator (110) and the second separator (120) are stacked, portions of the first separator (110) and portions of the second separator (120) are fixedly connected to form a plurality of pouch-like structures (150) each with an opening (151), and the plurality of pouch-like structures (150) are arranged at intervals along a length direction of the composite unit (100);
a plurality of first electrode plates (130) arranged in the plurality of pouch-like structures (150) in a one-to-one correspondence; and
a plurality of second electrode plates (140), wherein a polarity of the first electrode plates (130) is opposite to a polarity of the second electrode plates (140), and the second electrode plates (140) are alternately arranged at a side of the first separator (110) away from the first electrode plates (130) and at a side of the second separator (120) away from the first electrode plates (130) along the length direction of the composite unit (100).

2. The thermal composite laminated cell according to claim 1, **characterized in that** a first electrode tab (131) is provided at a side of each first electrode plate (130), and at least a portion of each first electrode tab (131) extends to an outside of a corresponding one of the pouch-like structures (150) from the opening (151) thereof.

3. The thermal composite laminated cell according to claim 1, **characterized in that** the pouch-like structures (150) each comprise a laminated portion (152) disposed along peripheral sides of a corresponding one of the first electrode plates (130) where no first electrode tab (131) is provided, and the first separator (110) and the second separator (120) are attached and connected at each laminated portion (152); or
the pouch-like structures (150) each comprise a laminated portion (152) disposed along peripheral sides of a corresponding one of the first electrode plates (130) where no first electrode tab (131) is provided, the first separator (110) and the second separator (120) are attached and connected at each laminated portion (152), and each laminated portion (152) extends along the peripheral sides of the corresponding first electrode plate (130) and is continuously arranged.

4. The thermal composite laminated cell according to any one of claims 1 to 3, **characterized in that** the first electrode plates (130) each comprise a first side edge (132), a bottom edge (133), a second side edge (134) and a top edge (135), with the first side edge (132) being opposite to the second side edge (134), and the bottom edge (133) being opposite to the top edge (135), and the first electrode tab (131) is disposed on the top edge (135).

5. The thermal composite laminated cell according to claim 4, **characterized in that** a width of a part of the laminated portion (152) at a side where the first side edge (132) is located and a width of a part of the laminated portion (152) at a side where the second side edge (134) is located are the same; and/or
a width of a part of the laminated portion (152) at a side where the bottom edge (133) is located and a width of a part of the laminated portion (152) at a side where the top edge (135) is located are the same.

6. The thermal composite laminated cell according to claim 4, **characterized in that** a width of a part of the laminated portion (152) at a side where the first side edge (132) is located is D1, where 4 mm ≤ D1 ≤ 10 mm; and/or
a width of a part of the laminated portion (152) at a side where the second side edge (134) is located is D2, where 4 mm ≤ D1 ≤ 10 mm.

7. The thermal composite laminated cell according to claim 4, **characterized in that** a width of a part of the laminated portion (152) at a side where the bottom edge (133) is located is D3, where 2 mm ≤ D3 ≤ 5 mm; and/or
a width of a part of the laminated portion (152) at a side where the top edge (135) is located is D4, where 2 mm ≤ D4 ≤ 5 mm.

8. The thermal composite laminated cell according to claim 3, **characterized in that** a distance L between a side of the first electrode plate (130) where no first electrode tab (131) is provided and a part of the laminated portion (152) located at the side of the first electrode plate (130) satisfies 1 mm ≤ L ≤ 3 mm.

9. The thermal composite laminated cell according to claim 3, **characterized in that** the first separator (110) and the second separator (120) are thermally laminated and connected at a position of each laminated portion (152); and/or
the first separator (110) is thermally laminated and connected to second electrode plates (140) located at the side of the first separator (110), and the second separator (120) is thermally laminated and connected to second electrode plates (140) located at the side of the second separator (120).

10. The thermal composite laminated cell according to claim 3, **characterized in that** adjacent two of the first electrode plates (130) share the laminated portion (152) therebetween.

11. The thermal composite laminated cell according to claim 10, **characterized in that** an incompletely cutting-off structure (160) is provided at the laminated portion (152) between the adjacent two first electrode plates (130), and the composite unit (100) is folded along the incompletely cutting-off structure (160).

12. The thermal composite laminated cell according to claim 11, **characterized in that** the incompletely cutting-off structure (160) comprises a plurality of through-holes (161) penetrating the laminated portion (152), and the plurality of through-holes (161) are disposed at intervals along a width direction of the composite unit (100).

13. The thermal composite laminated cell according to claim 12, **characterized in that** the plurality of through-holes (161) each are in a shape of a circle, a rectangle, an ellipse, a hexagon or an octagon; or
the plurality of through-holes (161) each are in a shape of a circle, a rectangle, an ellipse, a hexagon or an octagon, and spacings between every adjacent two of the through-holes (161) each are S1, where 5 mm ≤ S1 ≤ 20 mm.

14. The thermal composite laminated cell according to claim 12, **characterized in that** each through-hole (161) of the plurality of through-holes (161) have a first dimension L1 and a second dimension W1, the first dimension is a distance between two parallel virtual planes that are in contact with two side walls of the through-hole (161), and the second dimension is a distance between two parallel virtual planes that are in contact with two end walls of the through-hole (161), where 1 mm ≤ L1 ≤ 20 mm, and/or, 1 mm ≤ W1 ≤ 2 mm.

15. The thermal composite laminated cell according to claim 1, **characterized in that** the first electrode plates (130) are one of negative electrode plates and positive electrode plates, and the second electrode plates (140) are other of the negative electrode plates and the positive electrode plates; or
the first electrode plates (130) are one of negative electrode plates and positive electrode plates, and the second electrode plates (140) are other of the negative electrode plates and the positive electrode plates; a projection of each of the positive electrode plates in a thickness direction of the thermal composite laminated cell falls within a planar region where each of the negative electrode plates is located.
